# EUROPEAN PATENT SPECIFICATION

(11) **EP 3 605 956 B1**
(45) Date of publication and mention of the grant of the patent: **01.03.2023**
(21) Application number: 17903333.7
(22) Date of filing: 01.04.2017
(51) Int. Cl.: H04N 21/61, H04N 21/647, H04L 65/80, H04L 41/5009, H04L 41/50, H04L 43/08, H04L 65/611

(54) **IPTV SERVICE QUALITY DETECTION METHOD, DEVICE AND SYSTEM**
VERFAHREN, VORRICHTUNG UND SYSTEM ZUM NACHWEIS DER IPTV-DIENSTQUALITÄT
PROCÉDÉ, DISPOSITIF ET SYSTÈME DE DÉTECTION DE QUALITÉ DE SERVICE IPTV

(43) Date of publication of application: 05.02.2020
(73) Proprietor: Huawei Technologies Co., Ltd., Longgang District Shenzhen, Guangdong 518129 (CN)
(72) Inventor: CHEN, Yewei, Shenzhen Guangdong 518129 (CN); WU, Mingxiao, Shenzhen Guangdong 518129 (CN); ZHAI, Shuke, Shenzhen Guangdong 518129 (CN); MENG, Wanhong, Shenzhen Guangdong 518129 (CN)
(74) Representative: Gill Jennings & Every LLP
(86) International application number: PCT/CN2017/079377
(87) International publication number: WO 2018/176496

(56) References cited:
- EP-A1- 2 187 563
- WO-A1-2015/052089
- CN-A- 101 247 286
- CN-A- 101 605 073
- CN-A- 101 984 583
- CN-A- 103 457 794

## Description

### TECHNICAL FIELD

The present invention relates to the field of communications technologies, and in particular, to a quality detection method, an apparatus, and a system.

### BACKGROUND

With popularity of broadband networks, Internet protocol television (Internet Protocol Television, IPTV for short) services are increasingly popular. The IPTV service is generally a type of television service that a service provider distributes a video multimedia resource to a user of the service provider by using a network device that uses an Internet protocol (Internet Protocol, IP for short) as a basic protocol. The IPTV services have a plurality of types, including video on live, video on demand, time-shifted multimedia playing (time-shifted media), and the like. The video multimedia resource may be distributed in a plurality of manners, for example, through the Internet, an operator self-built network, or a combination of the two. This type of service adapts well to a current trend of rapid network development, and fully and effectively utilize network resources.

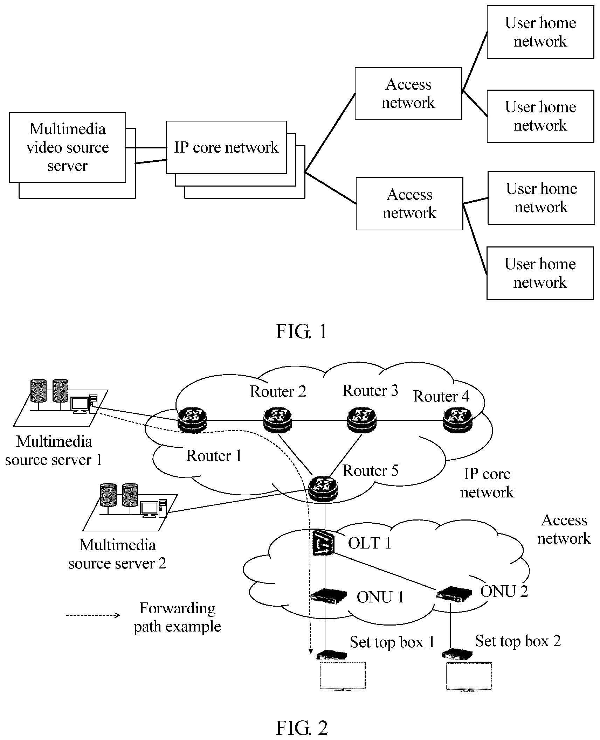

An IPTV service distribution network is relatively complex. As shown in FIG 1, a multimedia video source is stored in one or more video source servers of an IPTV service provider. After the multimedia video source is encapsulated into a data packet flow, the data packet flow needs to pass through a plurality of links such as an IP core network, a broadband access network, and a user home network to finally reach a user terminal, such as a set top box (Set Top Box, STB for short), thereby finally displaying a program on a screen. All these network devices and links may cause damage to the data packet flow of the video source, and consequently a phenomenon such as erratic display, frame freezing, or even a blank screen occurs when the user watches an IPTV program, and quality experience of the IPTV user is seriously affected.

Currently, when finding a service quality problem during watching of an IPTV program, a user manually reports the problem to a service provider of the user, and then the service provider appoints a maintenance person to a site (for example, a user's home or a location at which an access device is placed) to detect quality of a corresponding video service, to find a faulty device that deteriorates the quality of the IPTV service. In this method, a detection period is long, and manual troubleshooting is required. Consequently, high maintenance costs are caused.

Therefore, an IPTV service quality detection solution is required, to reduce operation and maintenance costs while implementing fast detection.

WO 2015052089A1 disclosed a method for validating internet protocol (IP) video channels, which contribute to the understanding of the invention since it discloses some technological descriptions of the known prior art in the technological field to which the invention relates. EP 2 187 563 A1 discloses a method for measuring quality of service, a transmission method, a device, and a system of messages.

### SUMMARY

The present invention is defined by the method of independent claim 1 and by the apparatus of independent claim 2.

In the following, parts of the description and drawing referring to embodiments, which are not covered by the claims are not presented as embodiments of the invention, but as examples useful for understanding the invention.

### BRIEF DESCRIPTION OF DRAWINGS

The following describes in more detail the embodiments of the present invention with reference to the accompanying drawings.
FIG 1 is a schematic diagram of a possible application scenario according to the present invention;
FIG 2 is a schematic diagram of a possible network to which an embodiment of the present invention is applicable;
FIG 3 is a schematic diagram of a packet header in the RTP protocol;
FIG 4 is a flowchart of an IPTV service quality detection method according to an embodiment of the present invention;
FIG 5 is a diagram of a processing procedure of a possible network device according to an embodiment of the present invention;
FIG 6 is a flowchart of another IPTV service quality detection method according to an embodiment of the present invention;
FIG 7 is a diagram of a processing procedure of a possible controller according to an embodiment of the present invention;
FIG 8 is a schematic structural diagram of a network device according to an embodiment of the present invention;
FIG 9 is a schematic structural diagram of a controller according to an embodiment of the present invention;
FIG 10 is a schematic structural diagram of another network device according to an embodiment of the present invention; and
FIG 11 is a schematic structural diagram of a detection center according to an embodiment of the present invention.

### DESCRIPTION OF EMBODIMENTS

A network system and a service scenario described in the embodiments of the present invention are intended to describe the technical solutions in the embodiments of the present invention more clearly, and do not constitute a limitation on the technical solutions provided in the embodiments of the present invention. Persons of ordinary skill in the art may know that, with evolution of a network architecture and emergence of new service scenarios, the technical solutions provided in the embodiments of the present invention are also applicable to similar technical problems.

As shown in FIG 1, one or more IPTV video resources are stored on one or more storage servers. After being encapsulated into a plurality of data packets (briefly referred to as a data packet flow subsequently), the one or more IPTV video resources are distributed by using network devices in networks such as a user home network, an access network, and an IP core network, so that different IPTV programs can be provided for a user. Related devices in the user home network, the access network, and the IP core network constitute an IPTV service distribution system. The solutions of the present invention are applicable to the IPTV service distribution system, and no limitation is imposed on a network type included in a specific IPTV service distribution system.

FIG 2 is a schematic diagram of a possible network to which an embodiment of the present invention is applicable. The network includes a set top box (Set Top Box, STB for short), an access network device in a passive optical network (Passive Optical Network, PON for short), a router device in an IP core network, and a plurality of multimedia video source servers. The PON includes devices such as an optical network unit (Optical Network Unit, ONU for short) and an optical line terminal (Optical Line Terminal, OLT for short). It should be noted that the access network may also be digital subscriber line (x Digital Subscriber Line, where x = A, V, S, and the like) networks of various types. In this application, the PON is used as an example of the access network. However, no limitation is imposed on an actually used access network and a type of a device in the access network in the present invention.

An ordered sequence including all network devices that forward a data packet flow corresponding to a video source of an IPTV program is briefly referred to as a forwarding path of the IPTV program. The devices on the forwarding path form an upstream-downstream relationship. A network device that receives a data packet flow is a downstream network device of a network device that sends the data packet flow. The latter is an upstream network device of the former. For example, in FIG 2, a router 1, a router 2, a router 5, an OLT 1, an ONU 1, and a set top box 1 constitute a forwarding path of an IPTV program. The OLT 1 is an upstream device of the ONU 1, and the ONU 1 is a downstream device of the OLT 1.

An IPTV video source needs to be encapsulated in a specific data encapsulation manner before being transmitted in a network. A possible manner is the real-time transport protocol (Real-time Transport Protocol, RTP for short) formulated by the Internet Engineering Task Force (Internet Engineering Task Force, IETF for short). The RTP protocol is used to transmit real-time data such as audio, video, and analog data, with emphasis on real-time performance of data transmission. Another possible manner is the hypertext transfer protocol (HyperText Transfer Protocol, HTTP for short). Without explicit explanation, an RTP protocol encapsulation format is used as an example in all the embodiments of this application. However, no limitation is imposed on an encapsulation format actually used in the present invention, provided that an encapsulation method can provide a function of detecting a quality of service (Quality of Service, QoS for short) parameter subsequently mentioned in this application.

An IPTV service distribution system may distribute a data packet flow of a video multimedia resource in a unicast (unicast) or multicast (multicast) manner. For example, a video-on-demand IPTV service is distributed in a unicast manner, and a video-on-live IPTV service is distributed in a multicast manner. When the multicast manner is used, a device in the IPTV service distribution system may use protocols such as the Internet group management protocol (Internet Group Management Protocol, IGMP for short), multicast listener discovery (Multicast Listener Discovery, MLD for short), and/or protocol independent multicast (Protocol Independent Multicast, PIM for short). The IGMP and the MLD are respectively used to manage multicast group member relationships in an IPv4 network and an IPv6 network, and the PIM protocol is used to establish and maintain multicast routing information in a network domain. When the IPTV service distribution system covers a plurality of network domains, an inter-domain multicast protocol further needs to be used to propagate multicast source information in a domain to a device in another domain. For example, the IGMP protocol may be used between the ONU 1 and the OLT 1 in FIG 2, whereas the PIM protocol may be used between the routers and between the router 5 and the OLT 1. A specific protocol needs to be selected based on specific networking and function requirements, and no limitation is imposed in the present invention.

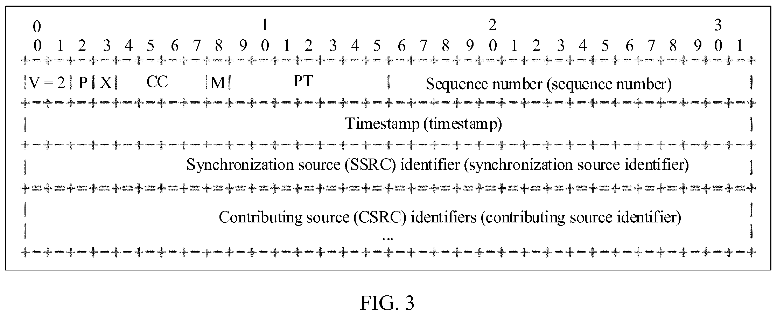

Fields included in a packet header in the RTP protocol are described in detail with reference to FIG 3.

V (2 bits, 2 bits): indicates a version number of the RTP protocol. An initial version number of the protocol is 0, and a version number specified in the RFC 3550 is 2.

P (1 bit): If the bit is set to 1, extra additional information is included at an end of a data packet. The last byte of the additional information indicates a length of the extra additional information (including the byte itself). The field exists because some encryption mechanisms require a data block with a fixed length, or exists to transmit a plurality of RTP packets in one underlying protocol data unit.

X (1 bit): If the bit is set to 1, there is an extended header after a fixed header.

CC (CSRC count, 4 bits): indicates a quantity of contributing source (Contributing Source, CSRC) identifiers that exist after the fixed header.

M (1 bit): A function of the bit depends on definition of a profile (profile). The profile may change a length of the bit, but a total length of the M field and a PT field needs to remain unchanged (8 bits in total).

PT (Payload Type, 7 bits): indicates a payload type, and indicates a type of information carried in an RTP packet. If a receiver cannot identify the type, the packet needs to be ignored.

Sequence number (16 bits): indicates a sequence number. The sequence number is increased by 1 after each RTP packet is sent, and the receiver may rearrange data packets based on the sequence number.

Timestamp (32 bits): indicates a timestamp, which reflects a sampling time of the first byte in information carried in the RTP packet.

SSRC (Synchronization source) identifier (32 bits): indicates a data source identifier. During an RTP session, each data flow should have a different SSRC.

CSRC identifiers (which may include any quantity (from 0 to 15) of identifiers, where each source identifier has 32 bits): indicates a contributing source identifier, and is valid only when Mixer exists. If a multichannel voice flow is combined into a single-channel voice flow, an SSRC of each original channel is listed herein.

In an IPTV service distribution system, after a video multimedia resource is encapsulated into an RTP data packet flow, the RTP data packet flow needs to pass through a plurality of network devices, to finally reach a user terminal device. Because load quantities and specific running statuses of the network devices constantly change, many problems such as disorder and packet loss occur in a process of transmitting RTP data packets. From a perspective of a user's watching experience, program quality may deteriorate, for example, a phenomenon such as frame freezing, erratic display, or even a blank screen may occur. In the solutions provided in the present invention, a means for automatically performing quality detection is provided to resolve this quality problem, so that a detection period can be shortened, and no manual intervention is required. Therefore, operation and maintenance costs can be effectively reduced.

The following further describes the embodiments of the present invention in detail based on a common aspect of the present invention described above.

### Embodiment 1

An embodiment of the present invention provides an IPTV service quality detection method, a network device, a detection center, and a system. One of the network devices periodically monitors QoS parameters of one or more IPTV video sources (or video source data packet flows); and when determining that a QoS parameter of an IPTV video source exceeds a preset threshold, sends a detection request message to an upstream network device of the network device to request the upstream network device to perform QoS parameter detection on a corresponding data packet flow.

After receiving the detection request message, when determining that QoS parameter detection needs to be performed, the upstream network device performs a detection procedure, to be specific, performs QoS parameter detection on a data packet sequence indicated in the detection request message, and collects a detection result of a parameter specified in the detection request message. In addition, the upstream network device further needs to forward the detection request message to an upstream device of the upstream network device until the detection request message is sent to a network device configured as the last network device in a to-be-detected sequence (for example, a network device connected to a video multimedia server, for example, a router 1 shown in FIG 2). After determining that QoS parameter detection needs to be performed, the network device that receives the detection request performs a detection procedure, to be specific, performs a detection action of the upstream network device. The network device sends a detection result to the detection center after the QoS parameter detection is completed. It should be noted that the to-be-detected sequence is a part or all of a forwarding path. For example, in FIG 2, ONU 1 -> OLT 1 -> router 5 -> router 2 -> router 1 may be a to-be-detected sequence, or OLT 1 -> router 5 -> router 2 may be a to-be-detected sequence, where the ONU 1 and the OLT 1 are respectively example network devices responsible for monitoring a QoS parameter in the two to-be-detected sequences. No limitation is imposed on selection of the to-be-detected sequence in the present invention. In actual application, an actual to-be-detected sequence may be determined based on a requirement or a device characteristic.

After receiving the detection result, the detection center determines, based on information about the detection result, a network device that deteriorates program quality, namely, a faulty network device. It should be noted that a reason for deteriorating the program quality may be any network device (and/or a link of the network device) that is between a video source server and a user screen and that forwards an RTP data packet. In other words, the faulty network device may be any network device on the forwarding path. For ease of description, in the present invention, a network device that is responsible for QoS monitoring and can autonomously initiate a detection request to another network device when finding a problem is referred to as a monitoring network device, to distinguish the network device from another network device that receives the detection request message and/or forwards the request message. Sometimes, for simple distinguishing, a first network device and a second network device are also used to indicate two different types of network devices. First and second described herein are merely for ease of description, and have no other special meanings. Essentially, the monitoring network device is also a network device configured to forward a data packet flow of a video source.

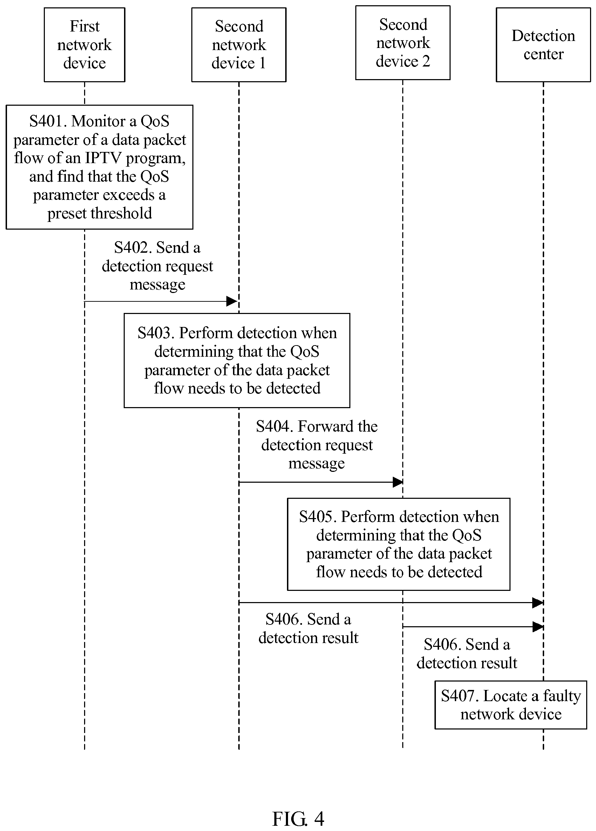

With reference to FIG 4, the following further describes the solutions provided in the embodiments of the present invention.

FIG 4 is a schematic diagram of an IPTV service quality detection procedure according to an embodiment of the present invention.

It should be noted that a first network device, a second network device 1, and a second network device 2 in FIG 4 are example devices on a forwarding path used to forward a data packet flow of an IPTV service. The second network device 1 and the second network device 2 constitute a to-be-detected sequence. The second network device 1 is a start point of a possible to-be-detected sequence in this embodiment, and the second network device 2 is the last network device in the to-be-detected sequence. It should be noted that in actual application, there may be one or more other second network devices between the second network device 1 and the second network device 2.

It should be further noted that, in a possible implementation, the to-be-detected sequence is a set of all devices on a forwarding path, and needs to include at least one network device. In another possible implementation, the to-be-detected sequence is some devices on the forwarding path. The some devices are a continuous device sequence set in the forwarding path.

S401. The first network device monitors a QoS parameter of a data packet flow of an IPTV program, and finds that the detected QoS parameter exceeds a preset threshold.

S402. The first network device sends a detection request message.

It should be noted that the data packet flow carries a video source identifier. The video source identifier is used to uniquely identify information about a to-be-detected IPTV program video source. In a unicast IPTV distribution system, video source identifier information may be indicated by using an IP address of a video source server and a transmission control protocol/user datagram protocol (Transmission Control Protocol/User Datagram Protocol, TCP/UDP for short) port number. In a multicast IPTV distribution system, video source identifier information may be indicated by using an IP address of a video source server and an IP address of a multicast group. It should be noted that the IP address may be an IPv4 address or an IPv6 address.

In a possible example, the first network device is configured to monitor a quantity of lost packets of the data packet flow (which may also be referred to as a data packet sequence) corresponding to the IPTV program. For example, the RTP protocol is used as a data encapsulation manner. In this case, the quantity of lost packets may be monitored by using a sequence number of a data packet header. It is assumed that a preset threshold of a quantity of lost packets is Nset(L). When detecting that an actual quantity N(L) of lost packets of an RTP data packet flow exceeds the preset threshold, in other words, N(L) > Nset(L), the first network device performs step S402, to be specific, sends the detection request message to an upstream network device (namely, the second network device 1) of the first network device.

In another possible example, the first network device is configured to monitor a delay and a quantity of lost packets of the data packet sequence corresponding to the IPTV program. For example, the RTP protocol is used as a data encapsulation manner. In this case, the delay may be calculated by using a timestamp of a data packet header and information about a time at which data is received. It is assumed that the preset threshold is that the quantity of lost packets is greater than 10 or that the delay exceeds 20 microseconds. The first network device performs step S402 when detecting that the quantity of lost packets is greater than 10 or that the delay exceeds 20 microseconds, in other words, when finding that the delay or a packet loss rate exceeds the threshold.

It should be noted that the QoS parameter of the data packet flow includes a delay, a quantity of lost packets (or a packet loss rate), a packet loss time interval, a delay variation, a quantity of out-of-order packets (or a quantity of out-of-order times), service bandwidth, and the like. For example, when video source data is encapsulated by using the RTP protocol, a delay, a packet loss rate, a packet loss time interval, a delay variation, and a quantity of out-of-order packets may be obtained through calculation based on information such as a sequence number and/or a timestamp in an RTP data packet header. For example, if sequence numbers of a data packet flow that should be received are 1, 2, 3, 4, 5, 6, 7, and 8, but sequence numbers of an actually received RTP data packet flow are 1, 3, 2, 4, 5, and 8, it can be learned, through calculation, that a quantity of lost packets of the currently received RTP data packet flow is 2, and that a quantity of out-of-order packets is 1 (in other words, data packets are out of order once). The delay may be obtained by subtracting, from a time at which a packet is received, timestamp information carried in the received packet. When the monitored QoS parameter is the service bandwidth, a threshold may be set to a reciprocal of preset bandwidth. To be specific, if the preset bandwidth is B, the threshold is set to 1B. An advantage of doing this is that "exceeding a preset threshold" is uniformly used as a trigger condition for detection. In actual application, a specific parameter and a quantity of parameters detected by the first network device, threshold setting, and a specific detection method may be freely selected based on a requirement. No limitation is imposed in the present invention.

The detection request message includes the video source identifier, a detection type, detection duration, and a detection step. The detection type indicates a QoS parameter of a to-be-detected data flow, and the QoS parameter may specifically include one or more of parameters such as a delay, a quantity of lost packets, a packet loss time interval, jitter, a quantity of out-of-order packets, and program bandwidth. The detection duration is a value of a length in which QoS parameter detection needs to be performed on the to-be-detected data flow, and may be a time length, or may be a length value measured by using another dimension. For example, 3-minute QoS parameter detection is performed. For another example, 10240 data packets are detected. The detection step is an interval between two consecutive QoS parameter information collections, and may be a time interval, or may be an interval measured by using another dimension (a quantity of video source data packets). Specifically, for example, parameters are collected once every 512 data packets.

Optionally, if the data packet flow is encapsulated by using the RTP protocol, the detection request message may further carry a start sequence number of an RTP data packet, to indicate a minimum sequence number carried in the to-be-detected RTP data packet. When the received detection request message carries the start sequence number, a sequence number of a data packet first detected by the network device in an actual detection process cannot be less than the start sequence number. When the detection request message received by the network device carries no start sequence number, the network device considers by default that the value is 0. Optionally, the detection request message may further carry an identifier of a network terminal that initiates detection, for example, an IP address or a media access control (Media Access Control, MAC for short) address of the network terminal. The information may help, to clearly determine information about a device that initiates active detection, an execution body (for example, the detection center in this embodiment) responsible for collecting a detection result and determining a faulty network device, and is used to record an event in an entire detection process or assist in determining the faulty network device.

S403. The second network device 1 performs a detection procedure when determining that the QoS parameter of the data packet flow needs to be detected.

Specifically, determining whether the detection procedure needs to be performed is: determining, by obtaining video source identifier information from the received detection request message through parsing, whether the network device currently performs QoS parameter detection on the video source identified by the video source identifier information. Specifically, the network device may maintain a "current detection information table" to record information about video source detection currently performed by the network device, or record currently performed video source detection in another manner. For example, information about QoS parameter detection currently performed by each network device is recorded by using a centralized server. For ease of description, subsequently, that the network device maintains the "current detection information table" is used as an example. However, in the present invention, no limitation is imposed on how the network device obtains the information about the "currently performed detection" of the network device in specific implementation.

For example, in this embodiment, when the second network device 1 finds, in a "current detection information table" of the second network device 1, no entry corresponding to the video source identifier information obtained through parsing, it indicates that the network device performs no detection on the data packet flow or has completed detection, so that it can be determined that the QoS parameter of the data flow of the video source needs to be detected. A specific quantity of to-be-detected QoS parameters, specific types of the to-be-detected QoS parameters, and information about a time length and a step in which detection needs to be performed may be specified by using a parameter carried in the received detection request message. In addition, these parameters may be configured by a network management system on the network device. When or after the detection procedure is performed, the second network device 1 needs to add an entry to the "current detection information table" of the second network device 1, to record parameter information in the received detection request. For a specific QoS parameter, refer to a description of the detection type in step S402. Details are not described herein again.

It should be further noted that step S403 is not a mandatory step. The network device may be configured to directly perform monitoring after receiving the detection request message.

S404. The second network device 1 forwards the detection request message.

Specifically, after determining that QoS parameter detection needs to be performed, the second network device 1 forwards the received detection request message to an upstream network device of the second network device 1, such as the second network device 2 in FIG 4. This forwarding action and an action of performing the detection procedure have no strict sequence relationship, and may be performed simultaneously or in any sequence.

S405. The second network device 2 performs detection when determining that the QoS parameter of the data packet flow needs to be detected.

For details about this step, refer to a description in S403. Details are not described herein again. It should be noted that in this embodiment, the second network device 2 is the last device in the "to-be-detected sequence". Therefore, the device does not need to forward the received detection request message.

S406. The second network device 1 and the second network device 2 send detection results, where the detection results are used to locate a faulty device.

Specifically, the second network devices, namely, the second network device 1 and the second network device 2, send all detection results or current detection results to the detection center after all QoS parameter detections are completed or after one QoS parameter detection is completed. After or when the detection is performed, the second network device further needs to delete, from the "current detection information table" maintained by the second network device, an entry for which detection is completed. It should be noted that the second network device may also identify, in another manner, that detection corresponding to an entry is completed. For example, a status identifier is added to indicate whether the detection is being performed or is completed. In this case, when it is determined whether a video source is being detected, an entry whose status identifier is "being detected" needs to be searched for, but not all entries are to be detected.

S407. The detection center locates the faulty network device.

The detection center determines, based on the received detection results, a network device that deteriorates quality. Specifically, the detection center may sort the received detection results based on a forwarding path device sequence corresponding to the data packet flow specified in the detection results, to determine a device from which one (or more) QoS parameter starts to deteriorate, thereby determining that the device and/or a link directly connected to the device are/is a "root cause of a problem". Information about the forwarding path may be obtained through network management configuration, or may be obtained by the detection center in another manner (for example, from another device that manages a forwarding path or directly from the network device). No limitation is imposed in the present invention.

When a quality problem affecting watching experience of a customer is found, the first network device actively initiates the detection request, thereby effectively shortening a detection period time. If a broadband access network is a PON, the first network device may be an ONU. The first network device may also be a set top box (STB). However, a set top box device is a device in a user home network, and control performance and reliability of the set top box device are inferior to those of a device managed by an IPTV provider. Therefore, unless otherwise specified, in descriptions of this embodiment and subsequent embodiments, that a network terminal is a device managed by an operator is used as an example, for example, an ONU. However, in the present invention, no limitation is imposed on a device that can actually initiate a detection request during specific deployment, namely, a monitoring network device, which may be a network device in the user home network, the broadband access network, or an IP core network. In addition, the quality detection procedure described in this embodiment does not need to be intervened by a maintenance person, so that operation and maintenance costs for service quality detection can be effectively reduced.

In this embodiment of the present invention, detection request message transmission between the first network device and the second network device and detection request message transmission between the second network devices may be based on an IGMP protocol message, an MLD protocol message, or a PIM protocol message, or in a customized message format. Herein, for example, in FIG 1, the first network device is an ONU 1, and a network device OLT 1, a router 5, a router 2, and a router 1 are a to-be-detected sequence. It is assumed that a data packet is encapsulated by using the RTP protocol. The following further describes a message used in the detection procedure. It is assumed that the IPTV service distribution system uses a multicast manner. It is assumed that the ICMP protocol is used between the ONU 1 and the OLT 1, and the PIM protocol is used between the OLT 1 and the router 5 and between routers.

In an example, it is assumed that the ONU 1 is configured to detect a variation and a quantity of lost packets of an RTP data sequence of an IPTV program. When the jitter is greater than 30 microseconds or the quantity of lost packets is greater than 15, a detection request message needs to be sent. Assuming that currently the ONU 1 detects that the jitter is 20 microseconds and the quantity of lost packets is 20, the ONU 1 needs to construct a detection request message and send the detection request message to the OLT 1. The detection request message may be transmitted by using a REPORT message in the IGMP protocol or a message newly defined in the protocol. In a possible implementation, examples of a format and a value of related information included in the message are shown in Table 1.

**Table 1**

| Field name | Occupied byte (byte) | Specific value in this embodiment |
|---|---|---|
| IP address of a video source server | 4 (IPv4) or 16 (IPv6) | 202.110.110.110 |
| IP address of a multicast group | 4 (IPv4) or 16 (IPv6) | 224.1.1.22 |
| Detection type | 4 | 00000000 00000000 00000000 00000101 |
| Detection step | 4 | 1024, indicating every other 1024 RTP sequence numbers |
| Detection duration | 4 | 4, indicating that the detection duration is four steps |
| Start serial number | 2 | 0, indicating that a minimum detection sequence number is 0 |

An example of the IP address is an IPv4 address. In the detection type field, each bit (bit) indicates one type of QoS parameter, and 32 different types of QoS parameters in total may be indicated. If the bit is set to 1, it indicates that the parameter needs to be detected. Otherwise, it indicates that the parameter does not need to be detected. In a possible example, if bits of the field are numbered 1, ... , and 32 from a least significant bit to a most significant bit, the bits are indicated as follows:
bit 1: quantity of lost packets;
bit 2: quantity of out-of-order packets;
bit 3: delay;
bit 4: delay variation;
bit 5: service bandwidth; and
bits 6 to 32: reserved field, reserved for subsequent newly-added QoS parameter extension.

Specifically, in this embodiment, it is assumed that the detection request message sent by the ONU 1 to the OLT 1 requires a delay and a quantity of lost packets to be detected. A specific value of the field is 00000000 00000000 00000000 00000101.

It should be noted that if a used encapsulation format is not the RTP protocol, the detection step and the detection duration may be indicated in another manner, for example, be limited based on a time dimension.

Similarly, a detection request message transmitted between the OLT 1 and the router 5 and a detection request message transmitted between the routers may also include a parameter and a format shown in Table 1. A difference lies in that a used protocol is the PIM protocol, and the information may be carried in a DetectionRequest (detection request) message newly defined in the protocol or by using an existing message, such as a JOIN (join) message. The DetectionRequest (detection request) message is indicated by setting a Type field in a message packet header in the PIM protocol to 10.

After completing detection, the network device may send a detection result to the detection center by using the IP protocol or the simple network management protocol (Simple network manage Protocol, SNMP for short), or in a customized message format. In an example, a parameter related to the detection result reported by the network device OLT 1 may be of a format and a specific value in examples shown in Table 2.

**Table 2**

| Field name | Occupied byte | Value example |
|---|---|---|
| User identifier (optional) | 4 or 16 | 222.120.120.120 |
| IP address of a video source server | 4 or 16 | 202.110.110.110 |
| IP address of a multicast group | 4 or 16 | 224.1.1.22 |
| Detection type | 4 | 00000000 00000000 00000000 00000101 |
| Start sequence number of this detection | 2 | 0, a sequence number at which actual detection starts |
| Total quantity of detections | 1 | 4 |
| Quantity of lost packets (first parameter) | 4 | 0 |
| Delay (first parameter) | 8 | 7 |
| Quantity of lost packets (second parameter) | 4 | 20 |
| Delay (second parameter) | 8 | 9 |
| Quantity of lost packets (third parameter) | 4 | 0 |
| Delay (third parameter) | 8 | 13 |
| Quantity of lost packets (fourth parameter) | 4 | 0 |
| Delay (fourth parameter) | 8 | 11 |

Specifically, a specific quantity of parameters in the reported detection result is determined by using a quantity of bits that are set to 1 in the detection type field, the detection duration, and the detection step. In this embodiment, two bits in the detection type field are set to 1. Therefore, the detection result includes two types of QoS parameter values, which are specifically a quantity of lost packets and a delay. The detection step is 1024, and the detection duration is 4. In this case, the reported detection result needs to include 2 * 4 = 8 QoS parameter value results in total. For details, refer to four groups of values of the quantity of lost packets and the delay shown in Table 2. It should be noted that a unit of the delay is microseconds in this embodiment. However, another unit may also be selected in an actual application process. If the parameter of the detection request message further includes the program bandwidth, the detection result may be indicated by using a uniform unit, or a field is added to indicate a unit of the bandwidth. For example, 4 bits (bit) are used to indicate a unit, where 0001 indicates bps (bits per second), 0100 indicates kbps (kilobits per second), 0100 indicates Mbps (megabits per second), and 1000 is reserved for future extension.

Table 3 shows a possible detection result received by the detection center (a delay unit is uniformly microseconds).

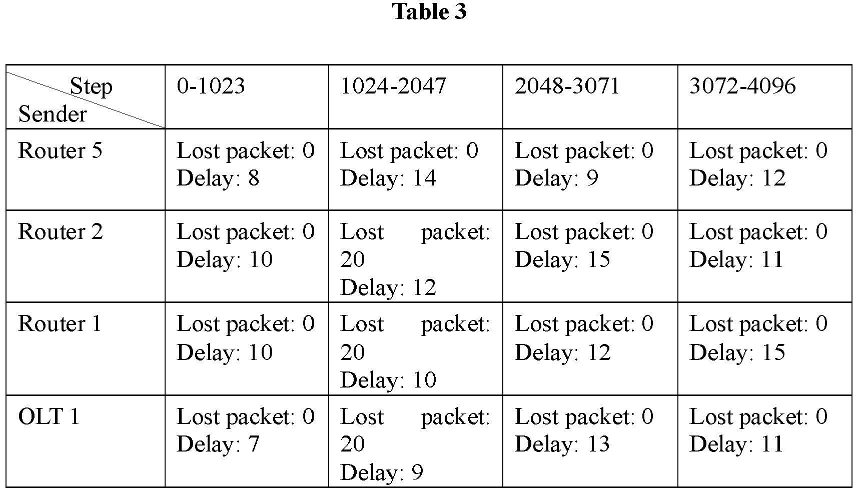

As shown in Table 3, the detection results are arranged in a sequence of a corresponding forwarding path (namely, "OLT 1 -> R1 -> R2 -> R5"). Therefore, the detection center may learn, through analysis, that a quantity of lost packets in R5 is 0, and that a quantity of lost packets is 20 starting from R2; and therefore may determine that a faulty network device is R2. It should be further noted that, optionally, the ONU 1, namely, the first network device, may also send a QoS parameter result monitored by the ONU 1 to the detection center, to assist the detection center in accurately determining a faulty device.

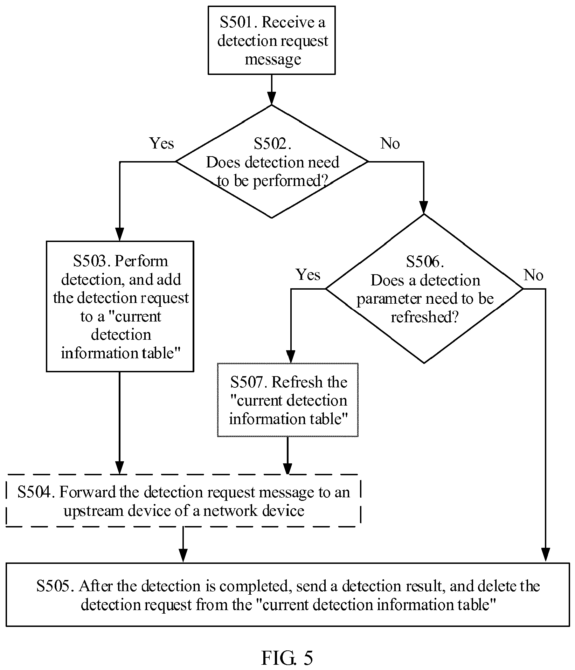

In addition to a case in which the second network device shown in FIG 4 determines that "detection needs to be performed", a result of the determining may be that "detection does not need to be performed". With reference to FIG 5, the following further describes the embodiments of the present invention mainly in a case in which "detection does not need to be performed".

FIG 5 shows a processing procedure of a possible network device according to an embodiment of the present invention.

S501. Receive a detection request message.

S502. Determine whether detection needs to be performed.

S503. Perform detection, and add the detection request message to a "current detection information table".

S504. Forward the detection request message to an upstream device of the network device.

S505. After the detection is completed, send a detection result, and delete the detection request from the "current detection information table".

S506. Determine whether a detection parameter needs to be refreshed.

S507. Refresh the "current detection information table".

It should be noted that step S504 is an optional step. When a second network device is not the last device in a to-be-detected sequence, this step needs to be performed. When the second network device is the last device, this step does not need to be performed.

In a possible implementation, the second network device needs to perform steps S501, S502, S503, S504, and S505. The step sequence is steps that need to be performed to determine that "detection needs to be performed". The steps are similar to the steps performed by the second network device 1 described in FIG 4. For details, refer to descriptions of steps S402, S403, S404, and S406 in FIG 4. Details are not described herein again. A difference lies in that S403 in FIG 4 is indicated by using two steps S502 and S503 in FIG 5. In addition, S402 in FIG 4 is described from a sender of the detection request message, and S501 in FIG 5 is described from a receiver of the detection request message, but there is no difference in content of the detection request messages.

In a possible implementation, the second network device needs to perform steps S501, S502, S506, S507, S504, and S505. The step sequence is steps that need to be performed when "detection does not need to be performed" but "a detection parameter needs to be refreshed". Specifically, when the network device finds a corresponding entry in the "current detection information table" of the network device, in other words, the "current detection information table" includes an entry corresponding to a video source identifier, it indicates that the network device has performed detection on this program source, and therefore no repeated detection is required. However, the network device needs to further extract information about a detection step, a detection type, and detection duration in the detection request message, to further determine whether related parameter information of the corresponding entry in the "current detection information table" needs to be refreshed.

In a specific example, it is assumed that a "current detection information table" of a network device includes the following entries:

**Table 4**

| Video source identifier information | Detection type | Detection step | Detection duration |
|---|---|---|---|
| (202.110.110.110, 224.1.1.22) | Delay | 1024 | 4 |

The detection request message received by the network device includes the following information:

**Table 5**

| Video source identifier information | Detection type | Detection step | Detection duration |
|---|---|---|---|
| (202.110.110.110, 224.1.1.22) | Delay; quantity of lost packets | 512 | 2 |

It should be noted that Table 4 and Table 5 provide only related parameters in this embodiment, and other unrelated parameters are not provided.

The network device may determine that QoS parameter detection has been performed on a program, to be specific, on a program video source identified by (an IP address of a video source server is 202.110.110.110 and an IP address of a multicast group is 224.1.1.22), and therefore no new detection needs to be performed. However, the network device currently detects only a delay, but the received detection request message further includes a quantity of lost packets, and detection duration information and detection step information are inconsistent with corresponding entries in the "current detection information table".

In a possible example, the network device may refresh the detection type to include a delay and a quantity of lost packets without changing the detection duration and the detection step in the current detection information table. In another possible example, the network device may refresh the detection step to be a smaller one of two parameters, to be specific, refresh the detection step to be 512. Specifically, how to modify information in the "current detection information table" may be determined by a policy configured on the network device and/or software and hardware capabilities of the network device. An example of the present invention is merely a possible example. However, in the present invention, no limitation is imposed on how to actually refresh a parameter in the "current detection information table".

In a possible instance, the second network device needs to perform S501, S502, S506, and S505. The step sequence is steps that need to be performed to determine that "detection does not need to be performed" and "a detection parameter does not need to be refreshed". It may be understood that, for the received detection request message, the second network device finds, in the "current detection information table" of the second network device, an entry that is consistent with to-be-detected video source identifier information in the detection request message. In addition, specific detection information (namely, information such as the detection type, the detection duration, and the detection step) specified in the received detection request message causes no impact on a specific parameter used for current detection. Therefore, the second network device does not need to refresh a related entry in the "current detection information table", but only needs to perform step S505, to be specific, when related detection that has been performed ends, send the detection result, and delete the completed detection entry from the "current detection information table". It should be noted that the second network device may alternatively send a detection result immediately after completing one detection, without waiting for all detections to be completed. No limitation is imposed on a specific manner used in the present invention.

Therefore, it can be learned that a detection request message does not necessarily trigger the second network device to perform a QoS parameter detection procedure, but may only trigger the second network device to modify a detection parameter (to be specific, refresh the detection parameter) of detection that has been performed, or even triggers no action (to be specific, a detection result provided in a detection procedure triggered by another detection request message is directly reused). An advantage of doing this is that repeated detection is prevented from being performed on same program source information, so that detection efficiency can be improved and network resources can be saved.

It should be noted that, in this embodiment, when the first network device sends the detection request message, the detection type, the detection step, and the detection duration may not be included. The parameter may be configured as a fixed value on the second network device by default. For example, a detection type is configured as a delay and a packet loss rate on a related second network device, a detection step is every other 1024 data packets, and detection duration is performing detection in four detection steps. In this way, exchanged information between the first network device and the second network device and exchanged information between the second network devices can be simplified.

It should be further noted that in this embodiment, the second network device may not perform step S502 in FIG 5, to be specific, perform detection on each received detection request message. In this way, limited resources of the network device may be consumed, but a processing procedure of the network device may be simplified. In the present invention, no limitation is imposed on whether the second network device needs to perform a determining procedure.

### Embodiment 2

An embodiment of the present invention provides another IPTV service quality detection method, a network device, a software defined networking (Software defined networking, SDN) controller, and a system. A first network device in the network devices monitors QoS parameters of data packet flows corresponding to one or more IPTV video sources, and periodically reports detected QoS parameter information to the SDN controller.

After receiving the QoS parameter information, when determining that the QoS parameter does not reach a preset threshold, the SDN controller further determines whether QoS parameter detection needs to be performed. When determining that QoS parameter detection needs to be performed, the SDN controller sends a first detection request message to a second network device included in a to-be-detected sequence on a forwarding path of a corresponding data packet flow. It should be noted that the to-be-detected sequence may further include the first network device. After receiving the first detection request message, the second network device performs QoS parameter detection on a data packet sequence indicated in the message, and collects a detection result of a parameter specified in the first detection request message. The second network device sends the detection result to the SDN controller after the QoS parameter detection is completed or after each detection is completed.

After receiving the detection result, the SDN controller learns of (or determines), through analysis based on detection result information, a network device that deteriorates program quality.

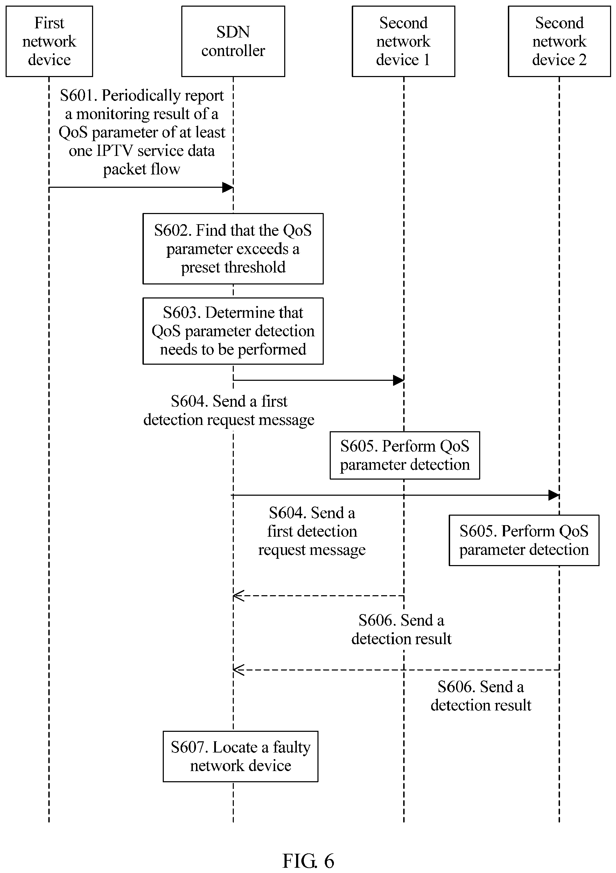

With reference to FIG 6, the following further describes the solutions provided in the embodiments of the present invention.

FIG 6 is a schematic diagram of another IPTV service quality detection procedure according to an embodiment of the present invention.

S601. A first network device periodically reports monitoring results of QoS parameters of one or more IPTV services.

Specifically, the first network device is configured to: monitor a data flow received by the first network device, and periodically report a detected parameter value to an SDN controller based on a configured time period. For a specific parameter that can be detected, refer to a description of the "QoS parameter of the data packet flow" mentioned in step S402 in FIG 4. Details are not described herein again.

S602. The SDN controller finds that a QoS parameter of an IPTV service exceeds a preset threshold.

Specifically, S502 is similar to an action of "finding that the detected QoS parameter exceeds a preset threshold" in S401. Refer to a description corresponding to step S401. Details are not described herein again.

S603. The SDN controller determines that QoS parameter detection needs to be performed.

S604. The SDN controller sends a first detection request message.

Specifically, when it is determined that QoS parameter detection needs to be performed, the first detection request message is sent. Specifically, the SDN controller determines, based on a forwarding path corresponding to the data flow and a detection policy, an object to which the first detection request message needs to be sent, namely, a to-be-detected sequence. It should be noted that, as a control center of an entire system, the SDN controller can obtain forwarding path information, and may obtain the forwarding path information through user configuration, from another server, or in another manner; or even the SDN controller may configure a specific forwarding path for each network device by using an algorithm or in another manner. No limitation is imposed in the present invention.

Specifically, the SDN controller needs to send the first detection request message to all devices in the to-be-detected sequence. In this embodiment, all the devices are second network devices 1 and 2. However, in a specific implementation, alternatively, there may be one or more other second network devices between the second network devices 1 and 2. For details about content of the first detection request message in this step, refer to a description of the "detection request message" in step S402 in FIG 4. Details are not described herein again. In addition, the SDN controller further needs to add a detection entry to a "current detection information table" of the SDN controller. It should be noted that an action of sending the first detection request message and the above described action of adding the entry may be performed in any execution sequence. No limitation is imposed in the present invention.

A network terminal periodically reports the monitored QoS parameter. When determining that the QoS parameter exceeds the threshold, the SDN controller actively requests a network device on a corresponding forwarding path to perform quality detection, thereby effectively shortening a detection period time.

S605. The second network device performs quality detection.

Specifically, after receiving the first detection request message sent by the SDN controller, the second network devices 1 and 2 perform QoS parameter detection.

S606. The second network device sends a detection result.

Specifically, after the QoS parameter detection is completed or after one parameter quality detection is completed, the second network devices 1 and 2 send, to the SDN controller, all detection results obtained by the second network devices 1 and 2 or detection results of current detections.

S607. The SDN controller determines a faulty network device.

Specifically, after receiving the detection result, the SDN controller needs to perform a same operation as S407 in FIG 4 to determine a network device that deteriorates quality. In addition, the SDN controller further needs to delete the completed detection from the "current detection information table" maintained by the SDN controller. It should be noted that the SDN controller may also identify, in another manner, that detection corresponding to an entry is completed, for example, add a status identifier to indicate that the detection is being performed or is completed; or obtain information about "currently performed QoS parameter detection" in another manner, for example, maintain the information by using an independent server. The present invention is described by using an example in which the SDN controller maintains a "current detection information table".

Optionally, the first network device may further perform the step of "determining that the QoS parameter exceeds a preset threshold", and send a second detection request message to the SDN controller. Correspondingly, after receiving the "second detection request message", the SDN controller directly determines whether detection needs to be performed and whether another action after the determining action in the foregoing procedure needs to be performed. One of SDN features is that a forwarding function is separated from a control function, and a forwarding device is simplified. Therefore, performing only a periodic reporting action is more compliant with the SDN feature, and complexity of a network terminal device can be reduced. However, in the present invention, no limitation is imposed on an execution body of "determining that the QoS parameter exceeds a preset threshold", and the execution body may be the first network device or the SDN controller.

The second detection request message needs to carry at least video source identifier information. Optionally, the second detection request message may further carry information about a detection type, detection duration, and a detection step. For specific information definition, refer to a related description in the "detection request message" in step S402 in FIG 4. Details are not described herein again.

The entire quality detection process described in this embodiment does not need intervention of a maintenance person, thereby effectively reducing maintenance costs. It should be noted that a difference between the SDN controller shown in FIG 6 and the detection center shown in FIG 4 lies in that the former may further send the detection request message to the second network device, without performing sequential forwarding between the first network device and the second network device and between the second network devices, thereby further shortening a detection period time.

In this embodiment of the present invention, message exchange between the second network device and the SDN controller and message exchange between the first network device and the SDN controller may be based on the OPENFLOW protocol or in a customized message format. Herein, the first network device ONU 1, the second network device OLT 1, the router 5, the router 2, and the router 1 in FIG 1 are used as examples. It is assumed that a data packet is encapsulated by using the RTP protocol. The following further explains a message used in the detection procedure. It is assumed that an IPTV service distribution system uses a multicast manner. The OPENFLOW protocol is used between the ONU 1 and the SDN controller and between the SDN controller and each of the OLT 1, the router 5, the router 2, and the router 1, in other words, between the SDN controller and a network device.

In an example, it is assumed that the ONU 1 is configured to: detect a delay and a quantity of lost packets of an RTP data sequence of an IPTV program, and periodically report detected parameter information, for example, every 1 minute.

Specifically, the ONU 1 may add an asynchronous report (Asynchronous Report) message by using the OPENFLOW protocol, to report these parameter values. A packet header of the asynchronous report message is a packet header of a current OPENFLOW protocol message, and is indicated by setting a Type field to 36. For an example of specific included parameter information, refer to Table 2. Details are not described herein again. Specifically, a monitoring result reported by the ONU 1 may be reported to the SDN controller each time monitoring is performed, or may be reported at a fixed interval.

The SDN controller needs to send a detection request message when a delay is greater than 30 ms or a quantity of lost packets is greater than 10. It is assumed that jitter in parameter information currently received by the SDN controller is 20 ms, and a quantity of lost packets is 20. In this case, the SDN controller needs to send a detection request message to a to-be-detected sequence in a forwarding path corresponding to the video source, namely, the OLT 1, the router 1, the router 2, and the router 5. A specific parameter included in the detection request message may be in a format shown in Table 1. Details are not described herein again. It should be noted that, the detection request message is indicated by newly adding an ACTION (action) type to an OFPT_FLOW_MOD message in the OPENFLOW protocol as OFPAT_DETECT, and a type in ofp_action_header is set to 30 to indicate OFPATDETECT.

To support parameter detection statistics collection, a new entry needs to be added to a FlowTable of the network device. Specifically, the network device needs to support read/write processing of related parameters shown in Table 6.

**Table 6**

| Field name | Occupied byte | Possible value or field meaning in this embodiment |
|---|---|---|
| Detection type | 4 | 00000000 00000000 00000000 00000101 |
| Detection step | 4 | 1024, indicating every other 1024 RTP sequence numbers |
| Detection duration | 4 | 4, indicating that the detection duration is four steps |
| Start serial number | 2 | 0, indicating that a minimum detection sequence number is 0 |
| Delay | 8 | Delay value |
| Quantity of lost packets | 4 | Value of the quantity of lost packets |
| Jitter | 8 | Jitter value |
| Bandwidth | 4 | Bandwidth value |
| Bandwidth unit | 2 | Different bits indicate different bandwidth units, for example, 0001 indicates bps (bits per second), 0100 indicates kbps (kilobits per second), and 0100 indicates Mbps (megabits per second) |

After the detection is completed, the second network device may send the detection result by using an OPENFLOW protocol message, such as an asynchronous report message. In a possible implementation, information received by the SDN controller is shown in Table 3. According to the detection result shown in Table 3, the SDN controller performs comprehensive determining with reference to the to-be-detected sequence (namely, OLT 1 -> R1 -> R2 -> R5) known by the SDN controller, and may learn, through analysis, that a quantity of lost packets in R5 is 0, and that a quantity of lost packets is 20 starting from R2; and therefore may determine that a faulty network device is R2.

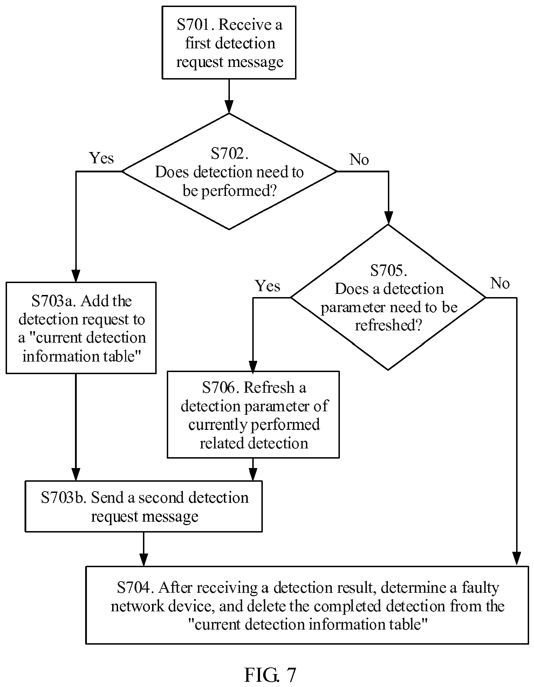

In addition to a case in which the SDN controller shown in FIG 6 determines that "detection needs to be performed", a result of the determining may be that "detection does not need to be performed". With reference to FIG 7, the following further describes the embodiments of the present invention in a case in which "detection does not need to be performed".

FIG 7 shows a processing procedure of a possible SDN controller according to an embodiment of the present invention.

S701. Receive a first detection request message.

S702. Determine whether detection needs to be performed.

S703a. Add a detection entry to a "current detection information table".

S703b. Send a second detection request message.

Specifically, the second detection request message is sent to all network devices in a "to-be-detected sequence".

S704. After receiving a detection result, determine a faulty network device, and delete the completed detection entry from the "current detection information table".

Specifically, after receiving the detection result, the SDN controller learns of, through analysis with reference to forwarding path information, a "faulty device" that deteriorates quality. It should be noted that result analysis and detection entry deletion are not limited to a strict execution sequence, and may be performed in any sequence.

S705. Determine whether a detection parameter needs to be refreshed.

S706. Refresh a detection parameter of currently performed related detection.

In a possible implementation, the SDN controller needs to perform steps S701, S702, S703a, S703b, and S704. The step sequence is steps that need to be performed to determine that "detection needs to be performed". Steps S702, S703b, and S704 are similar to the steps performed by the SDN controller described in FIG 6. For details, refer to descriptions of steps S603, S604, and S607 in FIG 6. Details are not described herein again. A difference lies in that the SDN controller in FIG 6 receives the monitored QoS parameter information sent by the first network device, and further needs to determine whether the received QoS parameter is abnormal, to be specific, whether the received QoS parameter exceeds the preset threshold. In addition, S703a is not shown in FIG 6, but is mentioned in a corresponding text description. It should be noted that S703a and S703b are sequentially performed in this embodiment. However, actually, the two steps may be performed in any execution sequence. No limitation is imposed in the present invention. In this embodiment, a first network device performs an action of determining "whether a QoS parameter is abnormal"; and when finding that the QoS parameter is abnormal, sends the first detection request message to request the SDN controller to initiate QoS parameter detection.

In a possible implementation, the SDN controller needs to perform steps S701, S702, S705, S706, S703b, and S704. The step sequence is steps that need to be performed to determine that "detection does not need to be performed" but "a detection parameter needs to be refreshed". Specifically, when the SDN controller finds a corresponding entry in the "current detection information table" of the SDN controller, to be specific, the "current detection information table" includes an entry corresponding to a video source identifier, it indicates that detection has been performed on this program source, and therefore no new QoS parameter detection needs to be performed. However, the SDN controller needs to further extract information about a detection step, a detection type, and detection duration in the detection request message, to further determine whether corresponding parameter information of a corresponding entry in the "current detection information table" needs to be refreshed.

In a specific example, it is assumed that some parameters in the "current detection information table" maintained by the SDN controller are shown in Table 4. Related parameters in the first detection request message received by the SDN controller are shown in Table 5. The SDN controller may determine that QoS parameter detection has been performed on this program source, to be specific, on a program (an IP address of a video source server is 202.110.110.110 and an IP address of a multicast group is 224.1.1.22), and therefore no new QoS parameter detection needs to be performed. However, the SDN controller currently detects only a delay, but the received detection request message further includes a quantity of lost packets, and neither detection duration information nor detection step information is consistent with a corresponding entry in the "current detection information table".

In a possible example, the SDN controller may refresh the detection type to include a delay and a packet loss rate without changing the detection duration and the detection step in the current detection information table. In another possible example, the SDN controller may request to refresh the detection step to be a smaller one of the two parameters, to be specific, refresh the detection step to be 512. Specifically, how to modify information in the "current detection information table" may be determined by a policy configured on the SDN controller and/or may be determined by comprehensively considering software and hardware capabilities of the SDN controller. An example of the present invention is merely a possible example. However, in the present invention, no limitation is imposed on how to actually refresh a parameter in the "current detection information table". Specifically, an identifier bit may be carried in the sent second detection request message, to indicate that an essence of the second detection request message is to request, to refresh a corresponding detection parameter, a main body (namely, the second network device) that receives the second detection request message, instead of requesting to perform QoS parameter detection.

In a possible implementation, the SDN controller needs to perform steps S701, S702, S705, and S704. The step sequence is steps that need to be performed to determine that "detection does not need to be performed" and "a detection parameter does not need to be refreshed". It may be understood that, for the received detection request message, the SDN controller finds, in the "current detection information table" of the SDN controller, an entry that is consistent with to-be-detected video source identifier information in the detection request message. In addition, specific detection information (namely, the detection type, the detection duration, and the detection step) specified in the received detection request message causes no impact on a parameter used for currently performed detection. Therefore, the SDN controller does not need to refresh a related entry in the "current detection information table", but only needs to perform step S704, to be specific, receive the detection result, learn of, through analysis, the faulty network device, and delete the completed detection entry from the "current detection information table". Therefore, it can be learned that a detection request message does not necessarily trigger the network device to perform a QoS parameter detection procedure, but may only trigger the network device to modify a detection parameter (to be specific, refresh the detection parameter) of detection that has been performed, or even triggers no action (to be specific, a detection result provided in a detection procedure triggered by another detection request message is directly reused). An advantage of doing this is that repeated detection is prevented from being performed on a same program source, so that detection efficiency can be improved and network resources can be saved.

It should be further noted that, for the embodiments in FIG 6 and FIG 7, optionally, when the second network device sends the detection result to the SDN controller each time after a QoS parameter is detected, the SDN controller may send a third detection request message to enable, to stop detection, the second network device currently performing QoS parameter detection. A reason for doing this may be that the SDN controller has obtained sufficient information to allow the SDN controller to determine a faulty network device. An advantage of doing this is that network device resources and link resource information are further saved without affecting detection quality analysis performed by the SDN controller. The third detection request message used to request to stop detection is sent by the SDN controller to a corresponding network device by using the OPENFLOW protocol or another customized message.

It should be further noted that, in specific application, when the SDN controller sends the second detection request message, the detection duration may not be carried, but the SDN controller actively sends a detection stop message to the network device, so that the network device actively stops detection when receiving the stop message. In this way, interaction between the SDN controller and the network device can be simplified, and it is ensured that the network device can continuously perform detection before the SDN controller determines that a faulty device can be learned of through analysis.

It should be further noted that when the SDN controller sends the first detection request message, the detection type and the detection step may not be carried. The parameter may be configured as a fixed value on the second network device by default. For example, a detection type is configured as a delay and a packet loss rate on a related network device, and a detection step is every other 1024 data packets. In this way, exchanged information between the SDN controller and the network device can be simplified.

In addition, it should be further noted that the SDN controller may not perform step S702 in FIG 7. To be specific, for each received first detection request message, the SDN controller requests the second network device to perform QoS parameter detection. In this way, limited resources of the network device may be consumed, but the processing procedure of the SDN controller may be simplified. In the present invention, no limitation is imposed on whether the SDN controller needs to perform a determining procedure. The foregoing mainly describes the solutions provided in the embodiments of the present invention from a perspective of interaction between the execution bodies. It may be understood that, to implement the foregoing functions, each execution body, such as the first network device, the second network device, the detection center, or the SDN controller, includes a software structure and/or a software module corresponding to each function. Persons skilled in the art should easily be aware that, units and steps in the examples described with reference to the embodiments disclosed in this specification can be implemented by using a combination of hardware and computer software. Whether some functions are performed by hardware or hardware driven by computer software depends on particular applications and design constraints of the technical solutions. Persons skilled in the art may use different methods to implement the described functions for each particular application, but it should not be considered that the implementation goes beyond the scope of the present invention.

### Embodiment 3

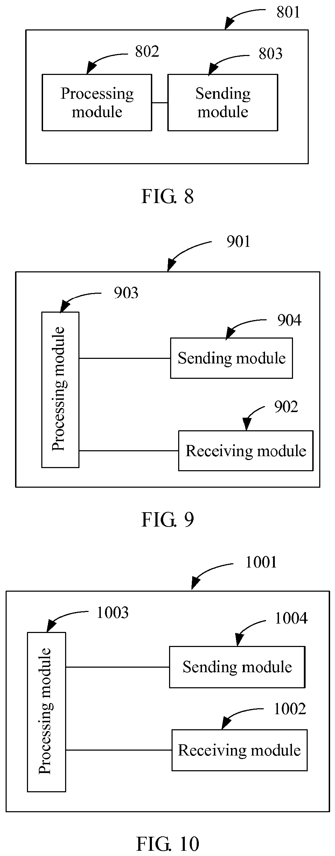

FIG 8 is a possible schematic structural diagram of a first network device 801 in the foregoing embodiment. The first network device 801 includes a processing module 802 and a sending module 803.

The processing module 802 is configured to monitor a quality of service QoS parameter of at least one data packet flow that carries a video source identifier, where the video source identifier is used to identify an IPTV video source. Optionally, the processing module 802 is further configured to generate a detection request message when determining that the QoS parameter exceeds a preset threshold. For a description of the detection request message, refer to the method embodiment 1. Details are not described herein again. The sending module 803 is configured to send the message. Specifically, the sending module 803 performs step S401 in FIG 4 or step S601 in FIG 6.

FIG 9 is a possible schematic structural diagram of a second network device 901 in the foregoing embodiment. The second network device 901 includes a receiving module 902, a processing module 903, and a sending module 904.

The receiving module 902 is configured to support the second network device 901 in receiving a request message from a downstream network device of the second network device, a first network device, or an SDN controller in the foregoing embodiment. The processing module 903 is configured to perform related technical processes of the network device that are described in FIG 4 and FIG 5 or related technical processes of the network device that are described in FIG 6 and FIG 7. The sending module 904 is configured to send a detection result of the second network device 901. In addition, the sending module 904 may be further configured to support the network device in forwarding a detection request message to an upstream network device of the network device in the foregoing embodiment.

FIG 10 is a possible schematic structural diagram of a SDN controller 1001 in the foregoing embodiment. The SDN controller 1001 includes a receiving module 1002, a processing module 1003, and a sending module 1004.

The receiving module 1002 is configured to support information exchange between the SDN controller 1001 and a first network device or information exchange between the SDN controller 1001 and a second network device. The processing module 1003 is configured to perform a processing process related to the SDN controller 1001 in the foregoing embodiment, for example, technical processes related to the SDN controller 1001 that are described in FIG 6 and FIG 7. The sending module 1004 is configured to send a detection request message. Optionally, the sending module 1004 may further send a detection stop request message.

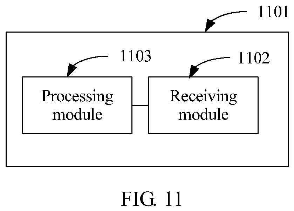

FIG 11 is a possible schematic structural diagram of a detection center 1101 in the foregoing embodiment. The detection center 1101 includes a receiving module 1102 and a processing module 1103.

The receiving module 1102 is configured to receive a detection result sent by the second network device mentioned in the foregoing embodiment. The processing module 1103 is used by the detection center 1101 to analyze the QoS parameter detection result based on the detection result, to determine a faulty network device.

It should be further noted that the processing module, the sending module, and the receiving module described above may be respectively a processor, a transmitter, and a receiver.

Persons of ordinary skill in the art will understand that all aspects of the present invention or possible implementations of the aspects may be specifically implemented as a system, a method, or a computer program product. Therefore, each aspect of the present invention or a possible implementation of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation of each aspect may take a form of a computer program product, where the computer program product is computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in fact be executed substantially at the same time, or these blocks may sometimes be executed in reverse order.

Persons of ordinary skill in the art may be aware that, units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of the present invention.

The invention is defined by the appended claims.

## Claims

1. An Internet protocol Television, IPTV, service quality detection method, wherein the method comprises:
monitoring, by a first network device, a quality of service, QoS, parameter of at least one data packet flow that carries a video source identifier, wherein the video source identifier is used to identify an IPTV video source;
generating, by the first network device, a detection request message when determining that the QoS parameter exceeds a preset threshold, wherein the detection request message comprises a video source identifier carried in a data packet flow whose QoS parameter deteriorates; and
sending the detection request message, by the first network device, to a second network device, to request the second network device to perform QoS parameter detection on the data packet flow that carries the video source identifier comprised in the detection request message;
wherein the detection request message further comprises a detection step and detection duration, the detection step indicates a time interval between two consecutive QoS parameter collections in a plurality of QoS parameter collections, and the detection duration indicates a time length value of the plurality of QoS parameter collections.

2. A network device (801), wherein the network device comprises a processing module (802) and a sending module (803), wherein
the processing module (802) is configured to: monitor a quality of service, QoS, parameter of at least one data packet flow that carries a video source identifier, wherein the video source identifier is used to identify an Internet protocol Television, IPTV, video source; and generate a detection request message when determining that the QoS parameter exceeds a preset threshold, wherein the detection request message comprises a video source identifier carried in a data packet flow whose QoS parameter deteriorates; and
the sending module (803) is configured to send to another network device the detection request message, wherein
the detection request message is used to request to perform QoS parameter detection on the data packet flow that carries the video source identifier comprised in the detection request message;
wherein the detection request message sent by the sending module (803) further comprises a detection step and detection duration, the detection step indicates a time interval between two consecutive QoS parameter collections in a plurality of QoS parameter collections, and the detection duration indicates a time length value of the plurality of QoS parameter collections.

## Patentansprüche

1. "Internet-Protocol-Television"- bzw. IPTV-Dienstqualitätsdetektionsverfahren, wobei das Verfahren Folgendes umfasst:
Überwachen, durch eine erste Netzvorrichtung, eines Dienstqualitäts- bzw. QoS-Parameters mindestens eines Datenpaketflusses, der eine Videoquellenkennung führt, wobei die Videoquellenkennung zum Identifizieren einer IPTV-Videoquelle verwendet wird;
Erzeugen, durch die erste Netzvorrichtung, einer Detektionsanforderungsnachricht, wenn bestimmt wird, dass der QoS-Parameter eine vorgegebene Schwelle überschreitet, wobei die Detektionsanforderungsnachricht eine Videoquellenkennung umfasst, die in dem Datenpaketfluss geführt wird, dessen QoS-Parameter sich verschlechtert; und
Senden der Detektionsanforderungsnachricht, durch die erste Netzvorrichtung, an eine zweite Netzvorrichtung, um die zweite Netzvorrichtung aufzufordern, eine QoS-Parameterdetektion an dem Datenpaketfluss, der die in der Detektionsanforderungsnachricht enthaltene Videoquellenkennung führt, durchzuführen;
wobei die Detektionsanforderungsnachricht ferner einen Detektionsschritt und eine Detektionsdauer umfasst, der Detektionsschritt ein Zeitintervall zwischen zwei aufeinanderfolgenden QoS-Parametererfassungen in mehreren QoS-Parametererfassungen angibt und die Detektionsdauer einen Zeitdauerwert der mehreren QoS-Parametererfassungen angibt.

2. Netzvorrichtung (801), wobei die Netzvorrichtung ein Verarbeitungsmodul (802) und ein Sendemodul (803) umfasst, wobei
das Verarbeitungsmodul (802) zu Folgendem ausgelegt ist: Überwachen eines Dienstqualitäts- bzw. QoS-Parameters mindestens eines Datenpaketflusses, der eine Videoquellenkennung führt, wobei die Videoquellenkennung zum Identifizieren einer "Internet-Protocol-Television"- bzw. IPTV-Videoquelle verwendet wird; und Erzeugen einer Detektionsanforderungsnachricht, wenn bestimmt wird, dass der QoS-Parameter eine vorgegebene Schwelle überschreitet, wobei die Detektionsanforderungsnachricht eine Videoquellenkennung umfasst, die in einem Datenpaketfluss geführt wird, dessen QoS-Parameter sich verschlechtert; und
das Sendemodul (803) ausgelegt ist zum Senden der Detektionsanforderungsnachricht an eine weitere Netzvorrichtung, wobei die Detektionsanforderungsnachricht dazu verwendet wird, ein Durchführen einer QoS-Parameterdetektion an dem Datenpaketfluss, der die in der Detektionsanforderungsnachricht enthaltene Videoquellenkennung führt, anzufordern;
wobei die durch das Sendemodul (803) gesendete Detektionsanforderungsnachricht ferner einen Detektionsschritt und eine Detektionsdauer umfasst, der Detektionsschritt ein Zeitintervall zwischen zwei aufeinanderfolgenden QoS-Parametererfassungen in mehreren QoS-Parametererfassungen angibt und die Detektionsdauer einen Zeitdauerwert der mehreren QoS-Parametererfassungen angibt.

## Revendications

1. Procédé de détection de la qualité d'un service de télévision par protocole Internet, IPTV, où le procédé comprend de :
surveiller, par un premier dispositif de réseau, un paramètre de qualité de service, QoS, d'au moins un flux de paquets de données qui porte un identifiant de source vidéo, où l'identifiant de source vidéo est utilisé pour identifier une source vidéo IPTV ;
générer, par le premier dispositif de réseau, un message de demande de détection lorsqu'il est déterminé que le paramètre de QoS dépasse un seuil prédéfini, où le message de demande de détection comprend un identifiant de source vidéo transporté dans un flux de paquets de données dont le paramètre de QoS se détériore ; et
envoyer le message de demande de détection, par le premier dispositif de réseau, à un second dispositif de réseau, pour demander au second dispositif de réseau d'effectuer une détection de paramètre de QoS sur le flux de paquets de données qui transporte l'identifiant de source vidéo compris dans le message de demande de détection ;
où le message de demande de détection comprend en outre une étape de détection et une durée de détection, l'étape de détection indique un intervalle de temps entre deux collections de paramètres de QoS consécutives dans une pluralité de collections de paramètres de QoS, et la durée de détection indique une valeur de durée de la pluralité de collections de paramètres de QoS.

2. Dispositif de réseau (801), dans lequel le dispositif de réseau comprend un module de traitement (802) et un module d'envoi (803), où
le module de traitement (802) est configuré pour : surveiller un paramètre de qualité de service, QoS, d'au moins un flux de paquets de données qui transporte un identifiant de source vidéo, où l'identifiant de source vidéo est utilisé pour identifier une source vidéo de télévision par protocole Internet, IPTV ; et générer un message de demande de détection lorsqu'il est déterminé que le paramètre de QoS dépasse un seuil prédéfini, où le message de demande de détection comprend un identifiant de source vidéo transporté dans un flux de paquets de données dont le paramètre de QoS se détériore ;
et
le module d'envoi (803) est configuré pour envoyer à un autre dispositif de réseau le message de demande de détection, où
le message de demande de détection est utilisé pour demander d'effectuer une détection de paramètre de QoS sur le flux de paquets de données qui transporte l'identifiant de source vidéo compris dans le message de demande de détection ;
où le message de demande de détection envoyé par le module d'envoi (803) comprend en outre une étape de détection et une durée de détection, l'étape de détection indique un intervalle de temps entre deux collections de paramètres de QoS consécutives dans une pluralité de collections de paramètres de QoS, et la durée de détection indique une valeur de durée de la pluralité de collections de paramètres de QoS.
